# EUROPEAN PATENT SPECIFICATION

(11) **EP 2 148 776 B1**
(45) Date of publication and mention of the grant of the patent: **16.07.2014**
(21) Application number: 08736338.8
(22) Date of filing: 17.04.2008
(51) Int. Cl.: B32B 5/26, B32B 27/12, D06N 3/00, D06N 5/00, E04D 5/10

(54) **A WATERTIGHT COMPOSITE SUPPORT FOR BITUMINOUS MEMBRANES WITH LIMITED THICKNESS AND WEIGHT AND A PROCESS FOR THE PRODUCTION THEREOF**
EIN WASSERUNDURCHLÄSSIGES VERBUND-STUTZMATERIAL FÜR BITUMINÖSE MEMBRANEN MIT BEGRENZTER DICKE UND GEWICHT UND VERFAHREN ZU SEINER HERSTELLUNG
SUPPORT COMPOSITE ETANCHE A L'EAU POUR MEMBRANES BITUMINEUSES POSSEDANT UNE EPAISSEUR ET UN POIDS LIMITES, ET PROCEDE DE PRODUCTION DUDIT SUPPORT

(30) Priority: 24.04.2007 IT MI20070853
(43) Date of publication of application: 03.02.2010
(73) Proprietor: POLITEX s.a.s. di FREUDENBERG POLITEX s.r.l., 20121 Milan (IT)
(72) Inventor: ROCCHETTA, Luigi, 26822 Brembio (IT); ROMANTINI, Alfredo, 22040 Monguzzo (IT); MIGLIAVACCA, Massimo, 20123 Milano (IT)
(74) Representative: Mittler, Enrico
(86) International application number: PCT/EP2008/054681
(87) International publication number: WO 2008/128967

(56) References cited:
- EP-A- 0 708 212
- EP-A- 0 767 284
- EP-A- 0 855 479
- EP-A- 1 316 600
- EP-A- 1 489 246
- WO-A-98/58140
- WO-A-2005/047615
- DE-U1- 29 801 953
- GB-A- 2 070 517
- GB-A- 2 341 578

## Description

The present invention relates to a composite product, which is intrinsically watertight and is adapted to form a support for bituminous membranes with limited thickness and weight, and to a process for the production thereof.

In the normal state of the art, the non-woven fabrics used as supports for bituminous membranes are permeable to water and thus require considerable thicknesses and amounts of modified bitumen to ensure the required level of watertightness.

The bituminous membranes are made by impregnating the support weaves, among which the polyester non-woven fabrics, in blends of molten bituminous mixture, so as to obtain rolls displaying a height in the range between 50 cm and 150 cm, a length in the range between 2 m and 30 m and a weight even higher than 5 kg/m² after cooling.

Most part of the mass of the final product consists of modified bitumen, as the weaves have an effect for limited grammages varying on the average from 100 g/m² to 300 g/m².

As bitumen is derived from crude oil, it is limited both by the exhaustibility of the resources of the source material and therefore by the expectable increase in costs, and by the incidental increase in costs due to the international political instabilities. This implies a restriction for the spreading of the bituminous membranes, especially in the countries which have no natural oil resources.

WO 2005/047615 discloses a composite support for bituminous membranes according to the preamble of claim 1.

It is the object of the present invention to provide a cost-effective alternative, thus allowing a considerable reduction of the amounts of bituminous mixture used in the manufacture of watertight supports.

According to the present invention, such an object is achieved by means of a composite support for bituminous membranes as defined in claim 1.

As the composite support according to the invention is intrinsically watertight, it allows to reduce the mass and the thickness of bitumen without compromising the performance of the product in terms of water lightness.

A possible practical embodiment of the composite support according to the present invention will now be described by way of example, together with the process for the production thereof, with reference to the accompanying drawings, in which:
figure 1 is a perspective view of a composite support according to the invention, which is shown partially open;
figure 2 is a cross section view of the support in figure 1;
figure 3 is a diagrammatic illustrative representation of the process for the production of the support in figures 1 and 2.

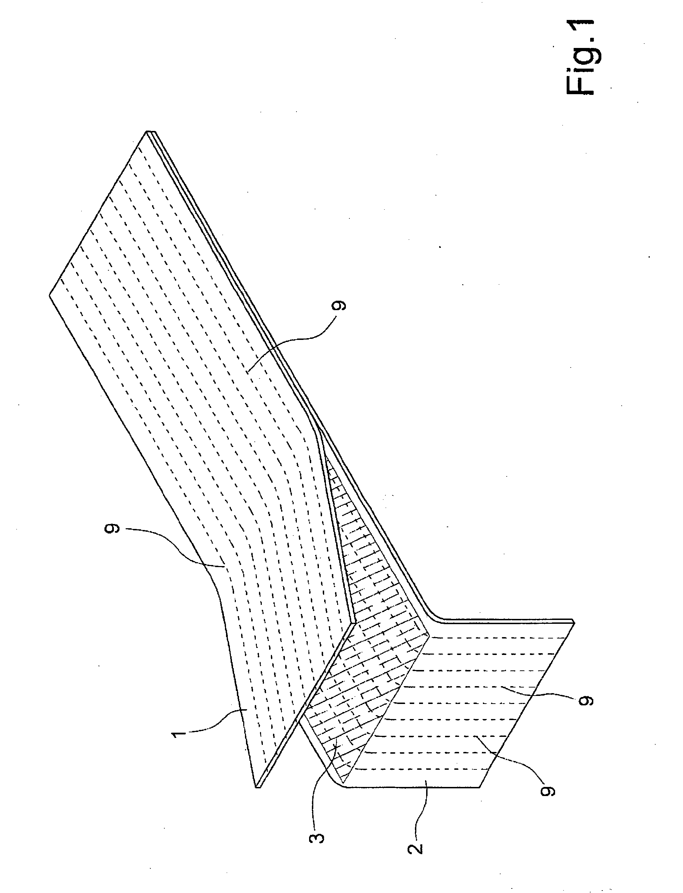

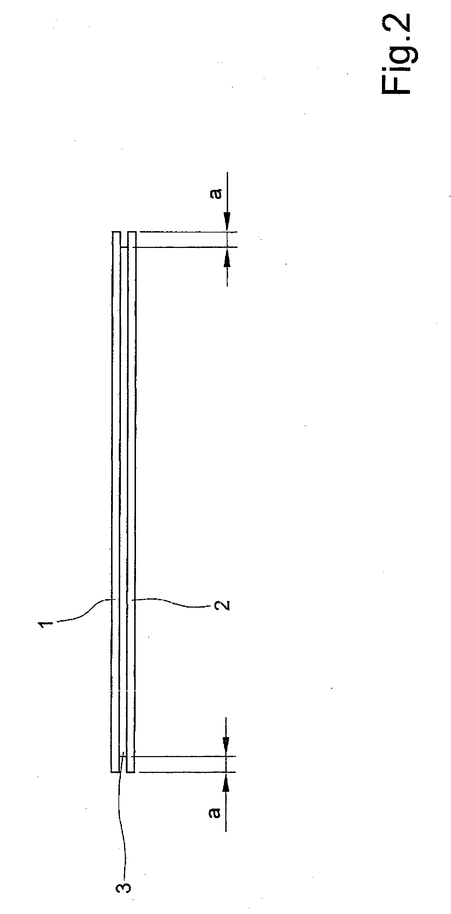

Figures 1 and 2 show a composite support 10, which includes a first layer 1 of non-woven fabric, a second layer 2 of non-woven fabric and an intermediate layer 3 of watertight material, consisting of a continuous membrane with a limited thickness, interposed between the layers 1 and 2 of non-woven fabric. The latter serve as a support and mechanical protection for the above mentioned membrane.

The membrane 3 is formed by an extruded film made of a polymer which has a high resistance to heat and is totally watertight: typically PET, with 4 limited thickness, on the order of 20 µ.

The layers of non-woven fabric 1 and 2 are also made of low grammage, typically 50 g/m², polyester and are needlepunched and impregnated with appropriate resins. As well as exerting a mechanical protection effect on the intermediate membrane 3, the two layers 1 and 2 also provide the product with a very good size stability, thus being reinforced in turn with high toughness and modulus longitudinal filaments 9, for instance made of glass, as described in Italian patent No. 1237149, or with inorganic or polymeric material meshes.

As may be noted in figures 1 and 2, the membrane 3 has a narrower width than that of the two layers 1 and 2 (a difference indicated by the letter (a) in the section of figure 2). In this manner, during the bitumen impregnation process, the required gripping points between the two layers 1 and 2 at the side ends will be generated for the whole length of the rolls. These gripping points are generated by the penetration of the bituminous mixture into the parts of non-woven fabric which are not involved by the polymer membrane 3.

The absence of the watertight membrane in the outer side strips of the roll does not compromise the performance of the product as far as the water tightness is concerned, as these areas are overlapped during the application step, thus conferring continuity to the watertightness given by the polymer film.

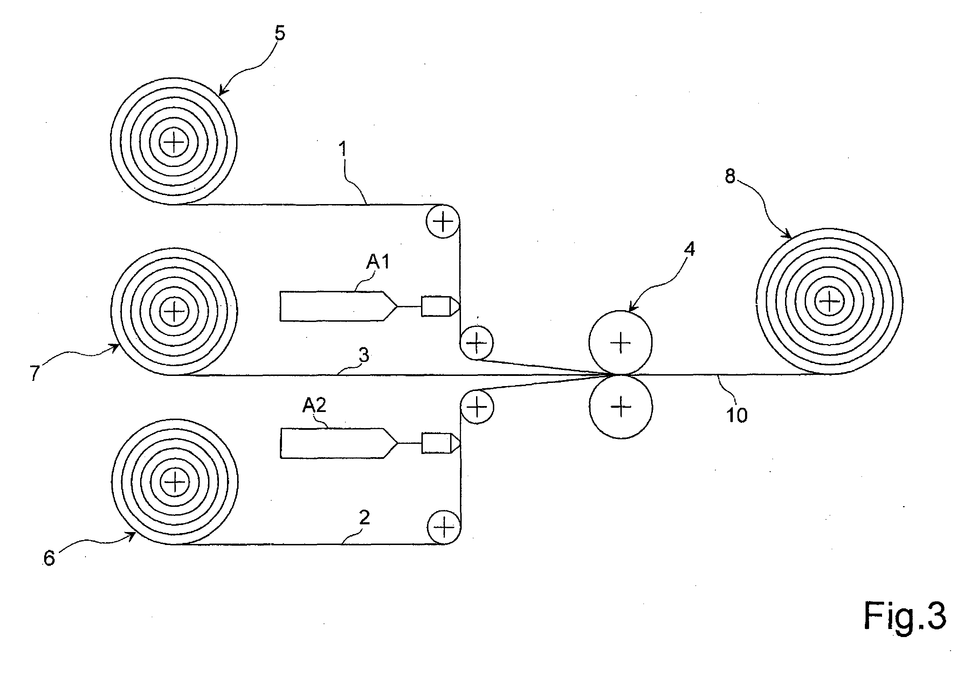

With reference to figure 3 the process for the production of a product according to the present invention is now described.

The product is produced by gluing by means of adhesives A1, A2 which are resistant to high temperatures (> 160 °C), typically having a polyurethane base but possibly also having a different base, of the polymer membrane 3 to each of the layers of non-woven fabric 1 and 2. After the application of the adhesive, the three layers 1, 2 and 3 are compressed in a calender 4 which ensures the elimination of possible air bubbles, the uniform distribution of the adhesive and the perfect adhesion of the layers.

The production process provides that the three components 1, 2 and 3 are unwound from respective rolls 5, 6 and 7 and that the final composite product 10 is finally wound to form a single roll 8.

It should be noted that the combination between the layers 1, 2 and 3 may occur by means of other thermal and/or mechanical systems such as ultrasound bindings etc.

The coupling of the polymer membrane 3 to the non-woven layers 1 and 2 may in turn occur in a single step or in multiple sequential steps.

## Claims

1. A composite support (10) for bituminous membranes, including a first (1) and a second (2) layer of non-woven fabric reinforced with longitudinal filaments (9) and a totally watertight continuous membrane (3) interposed between said layers (1, 2) of non-woven fabric, said watertight membrane (3) being formed by a film of PET, PA6, PA 66 or another polymer with a melting point above 160 °C, **characterised in that** said watertight membrane (3) has a thickness in the range between 5 µ and 50 µ and a narrower width than the layers of non-woven fabric (1, 2).

2. A composite support according to claim 1, **characterised in that** the layers of non-woven fabric (1) and (2) are formed by polyester non-woven fabric which is needlepunched and impregnated with acrylic, styrol-acrylic, styrol-butadiene resins, pure or mixed with melamine- or urea-formaldehyde-based cross-linkers or other cross-linking agents not containing formaldehyde, each layer displaying a total weight in the range between 10 g/m² and 150 g/m².

3. A composite support according to claim 2, **characterised in that** the longitudinal filaments (9) are made of glass, or inorganic or polymer material meshes, such as to provide the final support with a high size stability.

4. A composite support according to claim 1, **characterised in that** the layers of non-woven fabric (1) and (2) are formed by non-woven fabrics other than polyester.

5. A composite support according to any one of the preceding claims, **characterised in that** the polymer membrane (3) is bound to the layers of non-woven fabric (1, 2) by gluing.

6. A composite support according to claim 5, gluing in made by means of adhesives (A1, A2) which are resistant to high temperatures (> 160 °C).

## Patentansprüche

1. Verbund-Stützmaterial (10) für bituminöse Membranen, welches eine erste Vliesstoff-Schicht (1) und eine zweite Vliesstoff-Schicht (2), die mit Längsfilamenten (9) verstärkt sind, und eine völlig wasserdichte, durchgehende Membrane (3) umfasst, die zwischen den Vliesstoffschichten (1, 2) angeordnet ist, wobei die wasserdichte Membrane (3) aus einer Folie aus PET, PA6, PA 66 oder einem anderen Polymer mit einem Schmelzpunkt über 160°C gebildet wird, **dadurch gekennzeichnet, dass** die wasserdichte Membrane (3) eine Dicke in einem Bereich zwischen 5µm und 50µm hat und eine schmalere Breite als die Vliesstoffschichten (1, 2) hat.

2. Verbund-Stützmaterial nach Anspruch 1, **dadurch gekennzeichnet, dass** die Vliesstoff-Schichten (1) und (2) von Polyestervliesstoff gebildet werden, die genadelt und mit Acryl-, Styrol-Aryl, Styrol-Butadien-Harz, rein oder gemischt mit Melamin- oder Harnstoffformaldehyd basierten Querschmelzungsmitteln oder anderen Quervernetzungsmitteln, die kein Formaldehyd enthalten, imprägniert sind, wobei jede Schicht ein Gesamtgewicht in dem Bereich zwischen 10 g/m² und 150 g/m² aufweist.

3. Verbund-Stützmaterial nach Anspruch 2, **dadurch gekennzeichnet, dass** die Längsfilamente (9) aus Glas oder anorganischer oder polymerer Maschenware derart hergestellt sind, um die abschließende Abstützung mit einer hohen Größenstabilität bereit zu stellen.

4. Verbund-Stützmaterial nach Anspruch 1, **dadurch gekennzeichnet, dass** die Vliesstoff-Schichten (1) und (2) von anderen Vliesstoffen als Polyester gebildet werden.

5. Verbund-Stützmaterial nach einem der vorangehenden Ansprüche, **dadurch gekennzeichnet, dass** die Polymermembrane (3) mittels Kleben mit den Vliesstoff-Schichten (1, 2) verbunden ist.

6. Verbund-Stützmaterial nach Anspruch 5, **dadurch gekennzeichnet, dass** das Kleben mit Hilfe von Klebstoffen aus (A1, A2) erfolgt, welche hohe Temperaturen (< 160 °C) Stand halten.

## Revendications

1. Support composite (10) pour des membranes bitumeuses, comprenant une première (1) et une seconde (2) couches de textile non tissé renforcées avec des filaments longitudinaux (9) et une membrane continue totalement étanche à l'eau (3) intercalée entre lesdites couches (1, 2) de textile non tissé, ladite membrane étanche à l'eau (3) étant formée par un film de PET, PA6, PA 66 ou un autre polymère avec un point de fusion supérieur à 160°C, **caractérisé en ce que** ladite membrane étanche à l'eau (3) présente une épaisseur dans l'intervalle de 5 µ à 50 µ et une largeur plus étroite que les couches de textile non tissé (1, 2).

2. Support composite selon la revendication 1, **caractérisé en ce que** les couches de textile non tissé (1) et (2) sont formées par un textile non tissé de polyester qui est aiguilleté et imprégné avec des résines acrylique, de styrène-acrylique, de styrène-butadiène, pures ou mélangées avec des agents de réticulation à base de mélamine ou d'urée-formaldéhyde ou d'autres agents de réticulation ne contenant pas de formaldéhyde, chaque couche affichant une masse totale dans l'intervalle de 10 g/m² à 150 g/m²*.*

3. Support composite selon la revendication 2, **caractérisé en ce que** les filaments longitudinaux (9) sont constitués de verre, ou de grilles de matière inorganique ou polymère, afin de fournir le support final avec une stabilité de dimension élevée.

4. Support composite selon la revendication 1, **caractérisé en ce que** les couches de textile non tissé (1) et (2) sont formées par des textiles non tissés différents du polyester.

5. Support composite selon l'une quelconque des revendications précédentes, **caractérisé en ce que** la membrane polymère (3) est liée aux couches de textile non tissé (1, 2) par collage.

6. Support composite selon la revendication 5, le collage étant réalisé au moyen d'adhésifs (A1, A2) qui sont résistants aux températures élevées (> 160°C).
